# FASCICULE DE BREVET EUROPEEN

(11) **EP 1 940 603 B1**
(45) Date de publication et mention de la délivrance du brevet: **03.12.2008**
(21) Numéro de dépôt: 06831273.5
(22) Date de dépôt: 03.10.2006
(51) Int. Cl.: B29C 65/00, B32B 27/08, C08J 5/12

(54) **INTERMÉDIAIRE DE COLLAGE POUR TEXTILE ENDUIT A BASE DE SILICONE**
BINDUNGS-ZWISCHENPRODUKT FÜR EINE SILIKONBESCHICHTETE FASER
BONDING INTERMEDIATE FOR SILICONE COATED TEXTILE

(30) Priorité: 03.10.2005 FR 0552988
(43) Date de publication de la demande: 09.07.2008
(73) Titulaire: Tissage et Enduction Serge Ferrari SA, 38110 Saint Jean de Soudain (FR)
(72) Inventeur: SAIZ, Carlos, 73190 CHALLES LES EAUX (FR); MARTIN, Géraldine, F-38100 La Tour Du Pin (FR)
(74) Mandataire: Palix, Stéphane
(86) Numéro de dépôt international: PCT/FR2006/050989
(87) Numéro de publication internationale: WO 2007/042712

(56) Documents cités:
- EP-A- 0 219 075
- EP-A- 0 239 099
- WO-A-20/05106103

## Description

### Domaine technique

L'invention se rattache au domaine des textiles techniques, plus particulièrement des textiles enduits ou revêtus. Elle concerne plus spécifiquement les textiles enduits dont la couche d'enduction est réalisée à base de silicone, appréciée notamment pour leur tenue aux hautes températures, leur résistance aux agressions chimiques ainsi qu'aux rayons Ultra Violets. L'invention vise plus particulièrement un intermédiaire de collage utilisé pour assembler plusieurs laizes de tels textiles. L'invention permet notamment de faciliter les opérations de collage, et d'améliorer la qualité de l'assemblage.

### Etat de la technique

De façon générale, les textiles enduits à base de polymères siliconés sont connus pour leur excellente résistance à la chaleur, et notamment au feu, ainsi que pour leurs propriétés de résistance aux agressions chimiques et aux rayonnements ultraviolets. Ce type de textile est donc fréquemment utilisé dans des conditions délicates de température. Pour ce faire, l'âme textile peut avantageusement, mais non exclusivement être réalisée à base de fils de verre, connus pour leurs bonnes propriétés thermiques.

Un problème se pose généralement lorsqu'il s'agit de solidariser différentes pièces de tissus enduits, notamment pour réaliser des ouvrages de grande largeur.

Ainsi, les techniques de couture ont largement été employées, mais elles présentent certains inconvénients. En effet, les opérations de couture génèrent des trous qui sont des amorces de déchirure. En outre, les coutures ne forment pas une barrière réellement étanche. De plus, les opérations de couture sont relativement délicates, puisqu'il convient de s'affranchir du phénomène de friction du fil de couture avec le matériau polymérisé siliconé, qui s'oppose au glissement du fil de couture. C'est pourquoi, il est fréquemment utilisé des fils à base de polytétrafluoroéthylène, connus pour leur faible coefficient de frottement.

Toutefois, ces fils, bien que résistant à la traction sont relativement coûteux.

Parmi les autres inconvénients de la couture, on peut également citer le fait que le passage du fil au travers du textile casse un certain nombre de filaments de l'âme, ce qui diminue la résistance mécanique de ce dernier.

En outre, les trous générés par les fils de couture constituent des points d'entrée de l'humidité, qui peut provoquer une dégradation des qualités mécaniques des fils de verre, et donc du textile en général.

D'autres techniques d'assemblage sont également employées, consistant à opérer par un procédé de collage pâteux ou liquide. Un tel procédé consiste à déposer à froid un mastic sur l'une des parties à assembler puis à apposer l'autre partie à assembler en appliquant pression et température. Dans le procédé liquide, la colle liquide est déposée, et l'application d'une pression permet de faire adhérer les toiles entre elles.

Cependant, les conditions dans lesquelles ce collage doit avoir lieu sont relativement contraignantes, puisque l'application du mastic ou de la colle liquide doit se faire dans une atmosphère sans poussière. De plus, le mastic ou la colle liquide créent généralement des bavures qui dégradent l'aspect visuel de la zone de collage. En outre, l'application de la pression engendrant le collage doit être relativement long pour assurer un collage efficace.

Par ailleurs, le mastic ou la colle liquide ne peuvent être appliqués sur des toiles enduites ajourées, par exemple réalisées à base de grilles ou de fils enduits tissés. Le mastic ou la colle liquide sont en effet inopérants dans cette configuration, car ils se rassemblent dans les jours de la toile. Les surfaces de contact entre les deux textiles ne sont donc pas maîtrisées.

Une autre technique pour réaliser un tel assemblage consiste à utiliser un intermédiaire de collage constitué par une composition appartenant par exemple à la famille des élastomères vulcanisables à chaud (EVC). Un tel intermédiaire est ainsi mis en place sur la zone de jonction entre les feuilles à assembler. Puis, l'application d'une pression et d'une température élevée provoque la réticulation de la silicone de l'intermédiaire qui réagit et permet l'accroche avec la silicone contenue dans chacune des deux couches d'enduction des deux textiles en regard.

Des exemples de composition convenant pour ce type d'intermédiaire de collage sont décrites dans les documents EP 0 219 075 et EP 0214631. Des difficultés sont toutefois constatées lors de la manipulation de tels types d'interface dans la mesure où le silicone non réticulé présente une consistance très déformable, et donc sans réelle tenue. C'est pourquoi, comme cela est décrit dans le document EP 0 219 075, le silicone non réticulé est généralement associé à une âme présentant une tenue et plus particulièrement à une résistance à l'élongation, qui peut être une âme tissée. La silicone non réticulée est également protégée par une feuille de matériau anti-adhésif, lui permettant l'enroulage sur lui-même lors de son transport.

Cette solution présente cependant certains inconvénients. En effet, la présence d'une âme à l'intérieur de la silicone non réticulé forme une zone d'interface pouvant en constituer une fragilité de la structure ultérieure. En outre, la silicone non réticulé est stockée sous forme de bandes enroulées sur elles-mêmes, et les opérations d'enroulage/déroulage provoquent inévitablement des variations dimensionnelles de la couche de silicone non réticulé. Il s'ensuit une non homogénéité des propriétés mécaniques de l'assemblage, des variations importantes des sections et donc la formation de zones de contraintes très importantes dans certaines régions de l'assemblage.

En outre, les propriétés chimiques du silicone non réticulé ont tendance à évoluer dans le temps, notamment lorsque celui-ci est exposé à des ambiances chaudes, de telle sorte que la solidité de la soudure peut être plus ou moins bonne en fonction de l'âge de la bande de silicone non réticulé utilisée. Cette caractéristique demande des précautions importantes lors du transport et lors du stockage,et en particulier de pouvoir identifier sur l'élastomère lui-même la date limite d'utilisation.

Dans le cas où la bande de silicone non réticulé est équipée d'un film pelable anti-adhésif, et est conditionnée enroulée selon une spirale d'Archimède, l'élimination du film pelable provoque également des allongements de l'intermédiaire de collage, avec des conséquences sur l'homogénéité des propriétés mécaniques des assemblages.

L'ensemble de ces inconvénients rend ces solutions difficiles à utiliser pour des ouvrages de grande envergure et de longue durée de vie, comme on les rencontre notamment dans la réalisation d'ouvrages en architecture textile.

Un des objectifs de l'invention est donc de permettre les opérations d'assemblage des textile enduit à base de silicone, avec un intermédiaire de collage qui présente des propriétés aussi constantes que possible, et dont la manipulation n'engendre pas de déformation préjudiciable à la qualité de l'assemblage, et surtout en étant facile à utiliser et à positionner avec précision.

### Exposé de l'invention

L'invention concerne donc un intermédiaire d'assemblage permettant d'unir deux feuilles textiles possédant chacune une couche d'enduction d'un polymère à base de silicone. Cet intermédiaire de collage comprend de façon connue une composition à base d'un élastomère silicone non réticulé. Afin d'assurer sa manipulation et sa protection, l'intermédiaire de collage est également équipé d'un film anti-adhésif positionné sur l'une de ses faces.

Conformément à l'invention, l'intermédiaire de collage se présente sous la forme d'un tronçon rectiligne plan d'une bande à base de la composition d'élastomère silicone non réticulé. Ce tronçon rectiligne comporte également un film translucide présent sur la seconde face de la bande, c'est-à-dire celle opposée à celle qui reçoit le film anti-adhésif.

Autrement dit, l'invention consiste à utiliser un intermédiaire de collage qui se présente sous la forme d'un segment de ruban suffisamment court, c'est-à-dire de quelques mètres au maximum, pour pouvoir être manipulé sans déformation excessive. On évite ainsi toute modification de l'épaisseur ou de la largeur de la bande après application, ce qui pourrait avoir des conséquences sur l'homogénéité des propriétés de la soudure, que l'on constate sur les intermédiaires de collage enroulés sur eux-mêmes.

La manipulation de la bande est donc facilitée, puisque ses deux faces sont protégées par deux films, qui sont de nature différente. Ces deux films sont présents tant que la bande n'est pas mise en place au niveau de la zone de soudure, ce qui assure une protection du silicone non réticulé, qui conserve donc ses propriétés chimiques.

En outre, les opérations de manipulation lors de la mise en place de l'intermédiaire de collage sur une des feuilles textiles à souder sont améliorées, puisque le film translucide permet de visualiser la zone de la feuille textile à travers la composition de silicone non réticulé. Le positionnement de la bande caractéristique se fait donc de manière très précise, afin notamment d'éviter tout mauvais alignement au niveau de la soudure. La présence du film transparent permet également de servir de support mécanique afin d'éviter toute élongation du ruban de silicone non réticulé, alors que le film de bande anti-adhésif a déjà été retiré pour présenter l'interface de collage sur la zone appropriée de la feuille textile.

Avantageusement, le film translucide peut être à base d'un polyester thermoplastique ou de façon plus générale de matière polymère transparente, présentant un faible taux d'allongement. En effet, un tel film permet d'assurer une stabilité dimensionnelle de l'intermédiaire de collage lors de ses manipulations, et donc une conservation des dimensions de la couche de silicone non réticulé.

Complémentairement, le film anti-adhésif peut être réalisé à base d'un polyéthylène thermoplastique ou de manière plus générale, avec un matériau présentant un faible pouvoir adhésif vis-à-vis du silicone non réticulé.

Ce faible pouvoir adhésif peut être amélioré en utilisant un film qui présente une surface gaufrée ou de manière générale, texturée de manière à limiter la superficie du contact avec la silicone non réticulée. Un tel film anti-adhésif est avantageux, car il évite tout arrachement ou déformation de la couche de silicone non réticulé lorsqu'il en est détaché.

Dans une forme particulière de réalisation, la composition de la bande caractéristique peut comprendre en outre des éléments dissipateurs d'énergie calorifique. Ces éléments additionnels peuvent être soit noyés dans l'épaisseur de la couche de silicone non réticulée, soit présents sur l'une et/ou l'autre des faces de cette couche de silicone non réticulé. Ces éléments dissipateurs d'énergie calorifique peuvent être choisis pour absorber certains rayonnements notamment dans le spectre infrarouge, et plus précisément, dans la bande 800 à 1 200 nanomètres. Ces éléments permettent d'améliorer la cinétique de la réaction de réticulation. Ces éléments additionnels peuvent être choisis pour visualiser l'achèvement de la réaction de réticulation de la silicone de l'intermédiaire dé collage. En effet, en employant des pigments thermo-chromiques, l'élévation de température au sein de l'intermédiaire de collage pendant une durée suffisante, permet de faire évoluer la couleur de ces pigments, et par conséquent d'authentifier que l'intermédiaire de collage a reçu une quantité de chaleur suffisante pour assurer une réticulation complète.

Dans une forme particulière de réalisation, l'intermédiaire de collage peut également comprendre des indications de marquage prévues sur l'une et/ou l'autre de ces faces. Ces indications peuvent par exemple se présenter sous forme de lignes de repérage, destinées à guider la mise en place de la seconde feuille à souder par rapport à la première. Autrement dit, après la mise en place de l'intermédiaire de collage en première feuille, une ligne de marquage reste apparente sur le dessus de l'intermédiaire de collage, et permet de positionner la lisière de la seconde feuille de manière très précise.

Ces indications de marquage peuvent également servir d'informations d'identification dans un but de traçabilité ou d'identification. En d'autres termes, le type de marquage peut être visible par transparence après assemblage de textiles enduits suffisamment translucides, typiquement à base de verre et de silicone blanc. Il est ainsi possible de détecter si une opération de soudure a été faite après une date limite d'utilisation apposée sur l'intermédiaire de collage.

En pratique, l'intermédiaire de collage peut se présenter sous forme de tronçons indépendants, ou bien sous forme d'un chapelet de tronçons rectilignes reliés les uns aux autres, et repliés les uns sur les autres. Dans ce dernier cas, le chapelet peut comporter des amorces de découpe au niveau des zones de liaison entre tronçons adjacents, permettant ainsi de découper la longueur adéquate d'intermédiaire de collage, lorsque plusieurs tronçons élémentaires sont nécessaires pour réaliser un assemblage de grande longueur.

### Description sommaire des figures

La manière de réaliser l'invention ainsi que les avantages qui en découlent ressortiront bien de la description des modes de réalisation qui suivent à l'appui des figures annexées dans lesquelles :
La figure 1 est une vue en perspective sommaire d'un intermédiaire de collage conforme à l'invention, montrée avec les films partiellement séparés de la couche de silicone non réticulé.
La figure 2 est une vue en coupe transversale de l'intermédiaire de collage de la figure 1.
La figure 3 est une vue en perspective sommaire de la couche de silicone non réticulé de l'intermédiaire de collage de la figure 1, montrée seule.
Les figures 4 et 5 sont des vues de dessus des deux feuilles de textile enduit au cours des opérations de soudure.
La figure 6 est une vue en perspective d'une variante de réalisation, montrant un chapelet de tronçons.

### Manière de réaliser l'invention

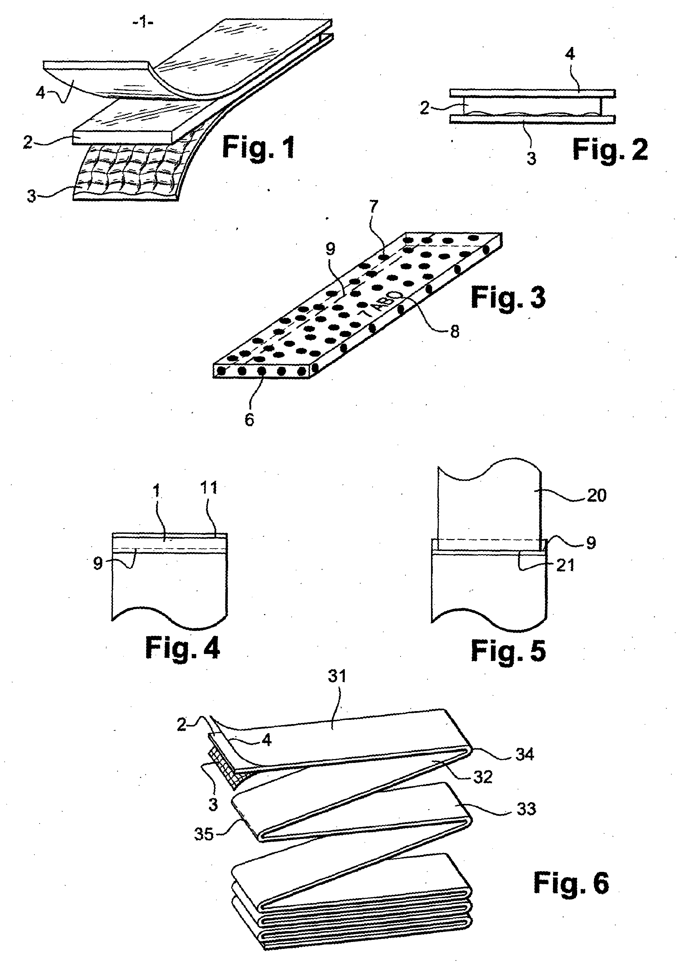

Comme illustré à la figure 1, l'intermédiaire de collage conforme à l'invention peut se présenter sous forme d'un tronçon (1) plan et rectiligne. Ce tronçon (1) est composé de l'assemblage de trois couches, à savoir une première couche principale (2) constituant l'intermédiaire de collage en tant que tel, recouverte sur chacune de ces faces par deux films.

La face inférieure de la couche (2) vient en contact d'un premier film anti-adhésif (3). La face supérieure de la couche intermédiaire (2) est recouverte d'un second film transparent (4).

La matière principale constituant la couche centrale (2) est à base d'élastomère silicone non réticulé. De nombreuses matières peuvent être utilisées, avec des compositions et des formulations différentes en fonction du type de feuille textile à assembler. Dans un exemple particulier de réalisation, on a obtenu de bons résultats en utilisant comme silicone non réticulée une composition d'élastomère silicone vulcanisable à chaud. De telles compositions sont connues pour être généralement constituées de polydiméthylsiloxane de très haute masse moléculaire, associées à des charges minérales renforçantes, et à différents additifs permettant leur durcissement par réticulation des chaînes polymères, voire favorisant leur ancrage sur les supports sur lesquels ils sont apposés. Ces matières se présentent sous une forme consistante, mais déformable sous l'effet d'une contrainte. Elles sont vulcanisables à chaud pour fournir un matériau d'aspect caoutchouteux, mécaniquement résistant. Leur mise en forme nécessite des pressions de l'ordre de quelques dizaines de barres, et leur vulcanisation intervient typiquement en quelques minutes, à des températures de l'ordre de 100 à 180°C.

Le film illustré (3) sous la face inférieure de la couche de silicone non réticulé (2) peut être typiquement à base de polyester, ou de manière plus général toute matière présentant un coefficient d'adhésion très réduit vis-à-vis du silicone non réticulé. Comme illustré, ce film peut présenter une texturation ou un état de surface qui limite la superficie de la zone de contact avec la couche centrale (2), toujours dans le but de limiter la force d'adhésion avec cette dernière.

Le film (4) présent sur la face supérieure de la couche de silicone non réticulé (2) peut être typiquement à base de polyester, ou de toute autre matière transparente, et présentant un faible taux d'allongement, sous l'effet de traction d'une amplitude raisonnable, observé lors des opérations de manipulation et de pelage. Typiquement, ce film peut présenter une épaisseur de l'ordre de 30 microns. Bien entendu, d'autres matières peuvent être employées, dès lors que le film anti-adhésif (3) adhère moins bien sur le silicone (2) que le film de protection (4), afin qu'il se détache en premier.

Selon une autre caractéristique de l'invention, et comme illustré à la figure 3, la couche (2) de silicone non réticulé peut comporter différents éléments additifs, dissipateurs d'énergie calorifique. Ces éléments (6) peuvent être notamment noyés à l'intérieur de la masse de la composition de silicone non réticulé, de manière à diffuser et/ou rayonner de la chaleur au coeur même de la matière à réticuler. Ces éléments additionnels (7) peuvent également être disposés en surface, ou à proximité immédiate de la surface de la couche de silicone non réticulé (2).

Dans ce cas, la réticulation est préférentiellement assistée à proximité de la couche d'enduction de la feuille textile à souder (non représentée). A titre d'exemple, ces éléments additionnels peuvent être constitués par une poudre de fine particules absorbant le rayonnement dans le spectre infrarouge. Ces particules sont choisies pour posséder un comportement chimique qui ne dégrade pas les propriétés du silicone non réticulé. Parmi de multiples exemples ayant donné satisfaction, on peut utiliser une poudre de pigment à base d'oxyde d'antimoine et d'étain, comme par exemple le produit Minatec 230A IR commercialisé par la société MERCK.

Selon une caractéristique de l'invention, et comme illustré à la figure 3, la couche (2) de silicone non réticulé peut présenter un certain nombre d'indications de marquage (8) permettant de coder l'intermédiaire de collage utilisé, en vue de son identification pour des besoins de traçabilité. Ce marquage peut donc être utile avant utilisation de l'intermédiaire de collage, pour identifier l'âge du tronçon considéré. Ce marquage (8) peut présenter également un intérêt après l'utilisation, dans la mesure où la feuille à souder présente un caractère translucide. En effet, par un rétro éclairage, il est possible que les indications (8) soient visibles, et ainsi on peut identifier la marque du fabricant ou une indication sur la date des opérations de soudure.

Selon une autre caractéristique de l'invention, la couche de silicone non réticulé (2) peut également inclure d'autres types de marquage, telle que notamment une ligne de positionnement (9), utile lors des opérations de soudure, telles que décrites aux figures 4 et 5.

Ainsi, l'emploi de l'intermédiaire de collage conforme à l'invention se fait selon le mode opératoire suivant.

Tout d'abord, le film anti-adhésif (3) est pelé, c'est-à-dire détaché de l'ensemble formé par la couche de silicone non réticulé (2) et du film supérieur (4). Le pelage de ce film se fait sans déformation de la couche de silicone non réticulé (2), grâce au faible pouvoir adhésif du film (3). La manipulation de l'intermédiaire de collage se fait sans déformation grâce à la présence du film supérieur (4), qui est non élongable.

Comme illustré à la figure 4, l'intermédiaire de collage est ensuite posé sur une lisière d'une fente textile (10) à souder. L'intermédiaire de collage (1) est positionné de telle manière qu'il déborde légèrement de la lisière (11) de la feuille (10), et ce afin de permettre à une partie du silicone non réticulé de venir au contact de la tranche de la feuille textile (10) après soudure.

Ce positionnement est rendu possible grâce à la transparence du film supérieur (4), et à sa bonne tenue mécanique.

Par la suite, ce film supérieur (4) est détaché de la couche (2) de silicone non réticulé. Du fait de l'adhésion entre la couche silicone de la feuille textile (10) et de la couche de silicone non réticulé, le pelage du film supérieur se fait sans déformation de la couche caractéristique (2). On remarque à la figure 4 que la ligne de marquage (9) est apparente, et va permettre le positionnement de la seconde feuille textile (20).

Ainsi, comme illustré à la-figure 5; la seconde feuille textile (20) est mise en place sur l'intermédiaire de collage, de telle sorte que sa lisière (21) coïncide avec la ligne de marquage (9) présente sur l'intermédiaire de collage. De la sorte, une fraction d'une couche de silicone non réticulée reste découverte, de manière à venir recouvrir la tranche de la seconde feuille textile (20).

Bien entendu, il est possible de mettre en place sur la lisière de la première feuille textile autant de tronçons (1) que nécessaire pour assurer une soudure continue. Pour éviter la dégradation de la couche de silicone non réticulée, les différents tronçons sont disposés les uns à la suite des autres, avant que leur film supérieur (4) ne soit pelé.

Par la suite, la réaction de réticulation est effectuée par l'application des conditions de température et de pression nécessaires.

Dans la variante illustrée en figure 6, l'intermédiaire de collage se présente sous la forme d'un chapelet de plusieurs tronçons rectilignes (31-33) repliés sur eux-mêmes. Ces différents tronçons sont solidarisés grâce au film anti-adhésif (3) et au film protecteur (4) qui sont continus. La couche de silicone (2) présente dans la forme illustrée des amorces de découpe (35) au niveau des plis (34) entre tronçons, pour faciliter la séparation des tronçons, lorsqu'il est nécessaire d'obtenir une longueur déterminée. Ces amorces de découpe peuvent également être réalisées sur les films anti-adhésif (3) et protecteur (4), pour permettre la séparation en tronçons individuels à la demande.

Il ressort de ce qui précède que l'intermédiaire de collage conforme à l'invention présente de multiples avantages, et notamment celui de permettre des manipulations simples et sécurisées, puisqu'il limite l'exposition du silicone non réticulé, et qu'il prévient toute déformation de ce dernier.

En outre, le positionnement de cet intermédiaire de collage est extrêmement précis grâce à l'emploi d'un film supérieur transparent, et à la possibilité d'intégrer des indications de marquage. Ces indications permettent également d'assurer des fonctions de traçabilité et d'identification.

## Revendications

1. Intermédiaire de collage (1) entre deux textiles (10, 20) possédant chacun une couche d'enduction d'un polymère à base de silicone, ledit intermédiaire comprenant une composition (2) à base d'un élastomère silicone non réticulé, et un film anti-adhésif (3) positionné sur une première face dudit intermédiaire, **caractérisé en ce qu'**il se présente sous la forme d'au moins un tronçon rectiligne plan d'une bande à base dudit élastomère silicone non réticulé, et **en ce qu'**il comporte un film translucide (4) présent sur la seconde face de la bande.

2. Intermédiaire de collage selon la revendication 1, **caractérisé en ce que** le film translucide (4) est à base d'un polyester thermoplastique.

3. Intermédiaire de collage selon l'une des revendications 1 ou 2, **caractérisé en ce que** le film anti-adhésif (3) est à base d'un polyéthylène thermoplastique.

4. Intermédiaire de collage selon l'une quelconque des revendications précédentes, **caractérisé en ce que** le film anti-adhésif (3) présente une surface gaufrée en contact avec la bande.

5. Intermédiaire de collage selon l'une quelconque des revendications précédentes, **caractérisé en ce que** la composition de la bande (2) comprend en outre des éléments dissipateurs d'énergie calorifique (6).

6. Intermédiaire de collage selon l'une quelconque des revendications précédentes, **caractérisé en ce que** la bande comprend en outre des éléments dissipateurs (7) d'énergie calorifique prévus sur la première et/ou sur la deuxième face de la bande.

7. Intermédiaire de collage selon l'une quelconque des revendications précédentes, **caractérisé en ce que** la bande comprend en outre un marquage (9) prévus sur la première et/ou sur la deuxième face de la bande.

8. Intermédiaire de collage selon l'une quelconque des revendications précédentes, **caractérisé en ce qu'**il comporte plusieurs tronçons rectilignes (31-33) reliés les uns aux autres et repliés les uns sur les autres.

9. Intermédiaire de collage selon la revendication 8, **caractérisé en ce qu'**il comporte des amorces de découpe (35) au niveau des zones de liaison (34) entre tronçons adjacents (31,32).

## Claims

1. Bonding intermediate (1) between two textiles (10, 20) each having a coating layer of silicone-based polymer, the said intermediate comprising a composition (2) based on a non-crosslinked silicone elastomer, and a release film (3) positioned on a first side of the said intermediate, **characterized in that** it has the shape of at least one planar rectilinear section of a strip based on the said non-crosslinked silicone elastomer, and **in that** it comprises a translucent film (4) provided on the second side of the strip.

2. Bonding intermediate according to Claim 1, **characterized in that** the translucent film (4) is based on a thermoplastic polyester.

3. Bonding intermediate according to either of Claims 1 and 2, **characterized in that** the release film (3) is based on a thermoplastic polyethylene.

4. Bonding intermediate according to any one of the preceding claims, **characterized in that** the release film (3) has an embossed surface in contact with the strip.

5. Bonding intermediate according to any one of the preceding claims, **characterized in that** the composition of the strip (2) further comprises heat dissipating elements (6).

6. Bonding intermediate according to any one of the preceding claims, **characterized in that** the strip further comprises heat dissipating elements (7) provided on the first and/or second side of the strip.

7. Bonding intermediate according to any one of the preceding claims, **characterized in that** the strip further comprises a marking (9) provided on the first and/or second side of the strip.

8. Bonding intermediate according to any one of the preceding claims, **characterized in that** it comprises a plurality of rectilinear sections (31-33) connected to one another and folded on one another.

9. Bonding intermediate according to Claim 8, **characterized in that** it comprises incipient cuts (35) in the bonding zones (34) between adjacent sections (31, 32).

## Patentansprüche

1. Bindungs-Zwischenprodukt (1) zwischen zwei Textilfasern (10, 20), die jede eine Polymer-Überzugsschicht auf Silikonbasis besitzt, wobei das besagte Zwischenprodukt eine Zusammensetzung (2) auf Basis eines nicht vernetzten Silikonelastomers und einen auf einer ersten Oberfläche des besagten Zwischenprodukts angebrachten, anti-adhäsiven Film (3) umfasst, **dadurch gekennzeichnet, dass** es sich in Form von mindestens einem geradlinigen, ebenen Abschnitt eines Bandes auf Basis des besagten, nicht vernetzten Silikonelastomers darstellt, und **dadurch**, dass es einen auf der zweiten Fläche des Bandes vorliegenden transparenten Film (4) umfasst.

2. Bindungs-Zwischenprodukt gemäß Anspruch 1, **dadurch gekennzeichnet, dass** der transparente Film (4) auf der Basis eines thermoplastischen Polyesters ist.

3. Bindungs-Zwischenprodukt gemäß den Ansprüchen 1 oder 2, **dadurch gekennzeichnet, dass** der anti-adhäsive Film (3) auf der Basis eines thermoplastischen Polyethylens ist.

4. Bindungs-Zwischenprodukt gemäß einem der vorhergehenden Ansprüche, **dadurch gekennzeichnet, dass** der anti-adhäsive Film (3) eine geprägte Oberfläche in Kontakt mit dem Band aufweist.

5. Bindungs-Zwischenprodukt gemäß einem der vorhergehenden Ansprüche, **dadurch gekennzeichnet, dass** die Zusammensetzung des Bandes (2) außerdem Wärmeenergie dissipierende Elemente (6) umfasst.

6. Bindungs-Zwischenprodukt gemäß einem der vorhergehenden Ansprüche, **dadurch gekennzeichnet, dass** das Band außerdem Wärmeenergie dissipierende Elemente (7) umfasst, die auf der ersten und/oder der zweiten Fläche des Bandes vorgesehen sind.

7. Bindungs-Zwischenprodukt gemäß einem der vorhergehenden Ansprüche, **dadurch gekennzeichnet, dass** das Band außerdem eine auf der ersten und/oder zweiten Fläche des Bandes vorgesehene Markierung (9) umfasst.

8. Bindungs-Zwischenprodukt gemäß einem der vorhergehenden Ansprüche, **dadurch gekennzeichnet, dass** es mehrere, gegenseitig miteinander verbundene und gegenseitig aufeinander gefaltete geradlinige Abschnitte (31 - 33) umfasst.

9. Bindungs-Zwischenprodukt gemäß Anspruch 8, **dadurch gekennzeichnet, dass** es auf dem Niveau der Verbindungsbereiche (34) zwischen angrenzenden Abschnitten (31, 32) Zuschneidemarkierungen (35) umfasst.
